# EUROPEAN PATENT APPLICATION

(11) **EP 4 443 091 A1**
(43) Date of publication of application: **09.10.2024**
(21) Application number: 22899980.1
(22) Date of filing: 23.08.2022
(51) Int. Cl.: F27B 9/30, F27B 9/40, H01M 4/36, H01M 10/0525

(54) **PRODUCTION LINE AND PRODUCTION METHOD FOR LITHIUM ION BATTERY POSITIVE ELECTRODE MATERIAL**

(30) Priority: 30.11.2021 CN 202111439759
(71) Applicant: Guangdong Brunp Recycling Technology Co., Ltd, Foshan, Guangdong 528137 (CN); Hunan Brunp Recycling Technology Co., Ltd., Changsha, Hunan 410600 (CN); Hunan Brunp EV Recycling Co., Ltd., Changsha, Hunan 410600 (CN)
(72) Inventor: WANG, Qian, Foshan, Guangdong 528137 (CN); LI, Changdong, Foshan, Guangdong 528137 (CN); ZENG, Yong, Foshan, Guangdong 528137 (CN); RUAN, Dingshan, Foshan, Guangdong 528137 (CN); LIU, Weijian, Foshan, Guangdong 528137 (CN); CAI, Yong, Foshan, Guangdong 528137 (CN)
(74) Representative: Studio Torta S.p.A.
(86) International application number: PCT/CN2022/114290
(87) International publication number: WO 2023/098161

(57) **Abstract**

Disclosed in the present invention are a production line and production method for a lithium ion battery positive electrode material. The production line comprises a roller kiln; a gas collection apparatus, which is in communication with the roller kiln and is used for collecting a gas from the roller kiln; and a free lithium measurement apparatus, which is used for measuring the content of free lithium in the gas that is collected by the gas collection apparatus. The production line for a lithium ion battery positive electrode material can monitor the state of free lithium in real time, such that a sintering parameter can be assessed in real time, so as to facilitate real-time adjustment of the sintering parameter, thereby reducing unqualified products, and avoiding the waste of raw materials.

## Description

### TECHNICAL FIELD

The present disclosure belongs to the technical field of lithium-ion batteries, and in particular relates to a production line and a production method for positive electrode material of a lithium-ion battery.

### BACKGROUND

At present, a roller kiln is commonly used in sintering of a positive electrode material of a lithium-ion battery, where a homogeneous mixture of a precursor, a lithium salt, and additives is sintered at a high temperature with a suitable sintering process under a certain atmospheric condition. Such a process is the key for preparing the positive electrode material with excellent electrochemical performance. Therein, temperature control, pressure control and atmosphere control of the kiln are particularly important.

According to the structure of a kiln, the roller kiln can be divided into a preheating zone, a firing zone and a cooling zone. The preheating zone is located in the front section of the kiln, where raw materials are dehydrated and the produced waste gas is discharged out. The firing zone is located in the middle of the kiln, where a redox reaction for forming the positive electrode material mainly occurs. The cooling zone is located at the tail of the kiln, where the positive electrode material after high-temperature sintering is cooled. In order to ensure that the firing reaction goes well, it is usually necessary to introduce an excess of gas, but the excess coefficient of gas (air) should not be too large. If the excess coefficient is too large, the heat taken away by the exhausted gas will be too much, resulting in an increase of ambient temperature and waste of energy. If the introduced gas is insufficient, it will result in an insufficient reaction. At present, in the industry, whether the sintering parameters are appropriate or not is commonly judged by evaluating residual lithium, morphology, crystal structure, compaction density, specific surface area, particle size, and electrochemical performance of a product resulting from the high-temperature sintering. Such evaluation, however, has a problem of lag that when the evaluation results show a problem with the sintering parameters, the raw materials have been sintered into unqualified finished product, resulting in waste of raw materials.

### SUMMARY

The present disclosure aims to solve at least one of the technical problems existing in the prior art. For this purpose, the present invention proposes a production line and production method for positive electrode material of a lithium-ion battery. This production line for positive electrode material of a lithium-ion battery can monitor the state of free lithium in real time, so that sintering parameters can be evaluated in real time, so as to be adjusted in real time, to reduce unqualified products, and to avoid waste of raw materials.

The above-mentioned technical purpose of the present disclosure is achieved through the following technical solutions.

A production line for positive electrode material of a lithium-ion battery comprises: a roller kiln; a gas collecting device, communicated with the roller kiln and configured to collect gas inside the roller kiln; and a measuring device for free lithium, configured to measure content of free lithium in the gas collected by the gas collecting device.

Preferably, the gas collecting device is communicated with a zero pressure position of the roller kiln, to collect the gas at the zero pressure position of the roller kiln. The zero pressure position refers to the position where the gas pressure in the roller kiln is equal to the external atmospheric pressure, which typically is positioned between a preheating zone and a firing zone of the roller kiln.

Preferably, a gas filtering device is further connected to the gas collecting device.

Preferably, a filter membrane, with a pore size of 400-500 nm, is provided inside the gas filtering device.

Preferably, the measuring device for free lithium is a potentiometric titrator.

Provided is a production method for a positive electrode material of a lithium-ion battery comprising a step of monitoring free lithium in gas inside a roller kiln during sintering of a positive electrode material of a lithium-ion battery.

Preferably, the method comprises steps of: collecting the gas inside the roller kiln by a gas collecting device and measuring content of free lithium in the collected gas by a measuring device for free lithium, during sintering of the positive electrode material of the lithium-ion battery.

Preferably, time for single collection of the gas inside the roller kiln by the gas collecting device is 0.2-5 h.

Preferably, the time for single collection of the gas inside the roller kiln by the gas collecting device is 0.5-2 h.

A method of debugging a production line for a positive electrode material of a lithium-ion battery comprises steps of: monitoring free lithium in gas inside a roller kiln during sintering of the positive electrode material of the lithium-ion battery, at a normal production line for the positive electrode material of the lithium-ion battery and a production line being debugged for the positive electrode material of the lithium-ion battery respectively, and adjusting intake and exhaust parameters of the production line being debugged for the positive electrode material of the lithium-ion battery, to control content of free lithium in the production line being debugged for the positive electrode material of the lithium-ion battery to be at the same level as that in the normal production line for the positive electrode material of the lithium-ion battery. Herein "same level" means that the difference in free lithium content measured per unit time between the normal production line for the positive electrode material of the lithium-ion battery and the production line being debugged for the positive electrode material of the lithium-ion battery with the same specification is less than 0.1%.

The present disclosure has the following beneficial effects:
(1) The production line for positive electrode material of a lithium-ion battery of the present disclosure can monitor the state of free lithium in a roller kiln in real time, so that the sintering parameters can be evaluated in real time to advance the evaluation, which can effectively reduce the rate of unqualified products.
(2) The sintering process of positive electrode material of a lithium-ion battery is the process of lithium ions entering crystal lattices with lattice structure to form a new phase, in which most of the lithium ions enter into crystal lattices of the new phase, and a very small part is left as residual lithium at the surface of the material. At a high temperature, a part of lithium is mixed with the waste gas generated from sintering in a form of gas and discharged into the atmosphere, while another part of lithium stays inside the atmosphere of the kiln in the free state, and finally deposits as lithium dendrite at the upper part of the inner wall of the kiln. According to the production method for positive electrode material of a lithium-ion battery of the present disclosure, the content of lithium free in the atmosphere in real time is monitored to judge whether the sintering process is reasonable or not, so that the sintering process can be adjusted in time, to avoid the problem of lag in the existing evaluation operation, and to reduce material loss in production line debugging and mass production introduction.
(3) The method for debugging a production line for positive electrode material of a lithium-ion battery of the present disclosure can be applied to the introduction of a new production line, which facilitates direct copying and pasting of processes, thereby improving uniformity of product.

### BRIEF DESCRIPTION OF DRAWINGS

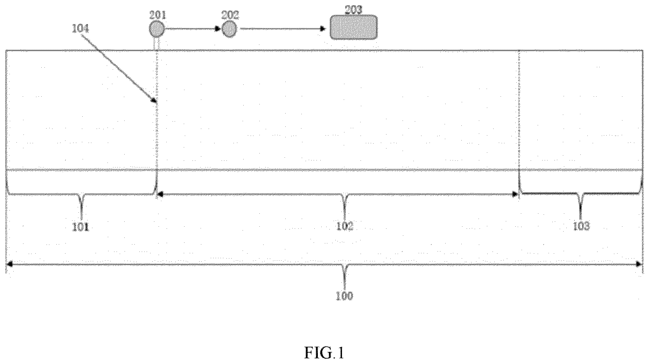

FIG. 1 is a schematic drawing showing a production line for positive electrode material of a lithium-ion battery in Example 1 of the present disclosure.

Reference numbers in the accompanying drawings:

100 roller kiln, 101 preheating zone, 102 firing zone, 103 cooling zone, 104 zero pressure position, 201 gas collecting device, 202 gas filtering device, 203 online potentiometric titrator.

### DETAILED DESCRIPTION OF EMBODIMENTS

The present disclosure will be further described below with reference to specific embodiments.

### Examples

### Example 1

A production line for positive electrode material of a lithium-ion battery, as shown in FIG. 1, comprises a roller kiln 100, a gas collecting device 201, a gas filtering device 202 and an online potentiometric titrator 203. The roller kiln 100 comprises a preheating zone 101, a firing zone 102 and a cooling zone 103. The gas collecting device 201 is communicated with a zero pressure position 104 of the roller kiln 100, for collecting the gas at the zero pressure position 104 inside the roller kiln 100. The zero pressure position 104 is located between the preheating zone 101 and the firing zone 102 of the roller kiln 100. The gas filtering device 202 is connected with the gas collecting device 201. Filter membranes and deionized water are provided inside the gas filtering device 202. The filter membranes had a pore size of 400-500 nm. The online potentiometric titrator 203 is used to measure the content of free lithium in the gas collected by the gas collecting device 201.

### Example 2

A production method for positive electrode material of a lithium-ion battery comprises the following steps.

(1) During sintering of a positive electrode material of a lithium-ion battery, the gas at the zero pressure position 104 inside the roller kiln 100 was collected by the gas collecting device 201, at a single collection time of 0.2-5h, preferably 0.5-2h;

(2) Small particles suspended in the collected gas was removed by the gas filtering device 202 equipped with deionized water, to obtain a lithium-containing solution;

(3) The content of free lithium in the lithium-containing solution was measured by the online potentiometric titrator 203, and the measured free lithium content was divided by the collection time to obtain the free lithium content collected per unit time.

### Example 3

A method for debugging a production line for positive electrode material of a lithium-ion battery comprises the following steps: in a normal production line for positive electrode material of a lithium-ion battery and a debugging production line for positive electrode material of a lithium-ion battery, the production method for positive electrode material of a lithium-ion battery in Example 2 was adopted respectively, to monitor the free lithium in the gas inside the roller kiln during the sintering; and the intake and exhaust parameters of the production line being debugged for positive electrode material of a lithium-ion battery were adjusted, so that the difference of the content of free lithium inside the roller kiln measured per unit time between the production line being debugged for positive electrode material of a lithium-ion battery and the normal production line for positive electrode material of a lithium-ion battery were less than 0.1%.

### Example 4

The method for debugging a production line for positive electrode material of a lithium-ion battery in Example 3, and LL5503(LiNi_{0.55}Co_{0.12}Mn_{0.33}O₂) positive electrode materials manufactured by applicant's company were used in the production line being debugged. The debugging method of the present disclosure was compared with the debugging method of the new production line being commonly used in the industry which characterizes the indicators of the material after one-time high-temperature sintering, until the technical indicators of the products of the two production lines tend to be at the same level. As a result, the debugging method of the present disclosure reduced the unqualified materials resulted from debugging by 50% and time-consuming by 60%.

### Example 5

The method for debugging a production line for positive electrode material of a lithium-ion battery in Example 3, and LL5515(LiNi_{0.55}Co_{0.06}Mn_{0.39}O₂) positive electrode materials manufactured by applicant's company were used in the production line being debugged. The debugging method of the present disclosure was compared with the debugging method of the new production line being commonly used in the industry which characterizes the indicators of the material after one-time high-temperature sintering, until the technical indicators of the products of the two production lines tend to be at the same level. As a result, the debugging method of the present disclosure reduced the unqualified materials resulted from debugging by 35% and time-consuming by 40%.

### Example 6

The method for debugging a production line for positive electrode material of a lithium-ion battery in Example 3 was adopted, and LL6506(LiNi_{0.65}Co_{0.07}Mn_{0.28}O₂) positive electrode materials manufactured by applicant's company were used in the production line being debugged. The debugging method of the present disclosure was compared with the debugging method of the new production line being commonly used in the industry which characterizes the indicators of the material after one-time high-temperature sintering, until the technical indicators of the products of the two production lines tend to be at the same level. As a result, the debugging method of the present disclosure reduced the unqualified materials resulted from debugging by 40% and time-consuming by 50%.

The above-mentioned examples are the preferred embodiments of the present disclosure, but they do not limit the embodiments of the present invention, and any other changes, modifications, substitutions, combinations and simplification of them, made without departing from the spirit or principle of the present invention should be deemed as equivalent substitutions, and being included in the protection scope of the present invention.

## Claims

1. A production line for a positive electrode material of a lithium-ion battery, comprising:
a roller kiln;
a gas collecting device, communicated with the roller kiln and configured to collect gas inside the roller kiln; and
a measuring device for free lithium, configured to measure content of free lithium in the gas collected by the gas collecting device.

2. The production line for the positive electrode material of the lithium-ion battery according to claim 1, wherein the gas collecting device is communicated with a zero pressure position of the roller kiln, to collect the gas at the zero pressure position of the roller kiln.

3. The production line for the positive electrode material of the lithium-ion battery according to claim 1, wherein a gas filtering device is further connected to the gas collecting device.

4. The production line for the positive electrode material of the lithium-ion battery according to claim 3, wherein a filter membrane, with a pore size of 400-500 nm, is provided inside the gas filtering device.

5. The production line for the positive electrode material of the lithium-ion battery according to claim 1, wherein the measuring device for free lithium is a potentiometric titrator.

6. A method for producing a positive electrode material of a lithium-ion battery, comprising a step of monitoring free lithium in gas inside a roller kiln during sintering of a positive electrode material of a lithium-ion battery.

7. The production method for the positive electrode material of the lithium-ion battery according to claim 6, comprising steps of: collecting gas inside the roller kiln by a gas collecting device and measuring content of free lithium in the collected gas by a measuring device for free lithium, during sintering of the positive electrode material of the lithium-ion battery.

8. The production method for the positive electrode material of the lithium-ion battery according to claim 7, wherein time for single collection of the gas inside the roller kiln by the gas collecting device is 0.2-5 h. a

9. The production method for the positive electrode material of the lithium-ion battery according to claim 8, the time for single collection of the gas inside the roller kiln by the gas collecting device is 0.5-2 h.

10. A method of debugging a production line for a positive electrode material of a lithium-ion battery, comprising steps of:
monitoring free lithium in gas inside a roller kiln during sintering of a positive electrode material of a lithium-ion battery at a normal production line for the positive electrode material of the lithium-ion battery and a production line being debugged for the positive electrode material of the lithium-ion battery respectively, and
adjusting intake and exhaust parameters of the production line being debugged for the positive electrode material of the lithium-ion battery, to control content of free lithium in the production line being debugged for the positive electrode material of the lithium-ion battery to be at the same level as that in the normal production line for the positive electrode material of the lithium-ion battery.
